# EUROPEAN PATENT SPECIFICATION

(11) **EP 0 975 496 B1**
(45) Date of publication and mention of the grant of the patent: **27.04.2005**
(21) Application number: 98913804.5
(22) Date of filing: 16.04.1998
(51) Int. Cl.: B60S 13/00, B60P 3/06

(54) **APPARATUS FOR TRANSPORTING OF A WORKING MACHINE**
VORRICHTUNG ZUM TRANSPORT VON ARBEITSMASCHINEN
APPAREIL DESTINE AU TRANSPORT D'UNE MACHINE DE CHANTIER

(30) Priority: 18.04.1997 FI 971652
(43) Date of publication of application: 02.02.2000
(73) Proprietor: Kortesalmi, Ossi, 95410 Kiviranta (FI)
(72) Inventor: Kortesalmi, Ossi, 95410 Kiviranta (FI)
(74) Representative: LEITZINGER OY
(86) International application number: PCT/FI1998/000337
(87) International publication number: WO 1998/047747

(56) References cited:
- DE-A- 2 134 583
- GB-A- 1 044 074
- NO-B- 133 183
- US-A- 3 147 871
- US-A- 4 081 090
- US-A- 4 826 385

## Description

The present invention relates to an apparatus for transfer rides of a working machine, especially an excavating machine, movable on crawler tracks and provided with an excavating mechanism or some other lifting means, said apparatus comprising at least two spaced-apart wheels and a load platform mounted therebetween, the working machine being adapted to be hoisted at one end thereof to rest on the apparatus and to be secured to the load platform as well as at the other end to prop against a tractor vehicle through the intermediary of the excavating mechanism or other lifting means of the working machine.

The working machines operating on crawler tracks are generally very slow and, thus, even relatively short-distance transfers of such machines are preferably covered by using separate carriages or wheel systems mounted on the working machine. Such a latter type of apparatus is prior known e.g. from GB Patent publication GB-A-1,044,074.

In the apparatus disclosed in GB Patent publication GB-A-1,044,074, a working machine is secured to a wheel system, wherefor the chassis of the working machine must be fitted with separate coupling elements, which may result in major costs. The prior known apparatus involves drawbacks in terms of its use as well. The use is inconvenient and slow, as it requires special measures and, in addition, the working machine operator must step out of the cab of a working machine for locking the wheel system in place or, respectively, for releasing the wheel system.

An apparatus of the preamble of claim 1 has been disclosed in US-A-4 826 385.

An object of the invention is to provide an apparatus, which is simply and quickly attachable to a working machine and which apparatus does not necessitate any modifications to the working machine.

According to the invention, this object has been achieved and an apparatus of the invention is characterized as defined in the characterising portion of claim 1.

When using an apparatus of the invention, a working machine can be brought very quickly to a transfer condition and respectively to an operating condition without forcing the driver to step out of the cab. Neither is it necessary for the driver of a tractor vehicle to step out of his or her vehicle since, when transferring an excavating machine, for example, it is sufficient that the bucket of the excavating machine be propped against the platform of the tractor vehicle.

The invention will now be described in more detail with reference made to the accompanying drawings, in which:
- fig. 1: is a side view, showing an apparatus of the invention in a condition, wherein the apparatus is ready to receive a working machine to be driven onto the same.
- Fig. 2: shows a working machine in a transfer condition, propped on the one hand against an apparatus of the invention and on the other hand against a tractor vehicle through the intermediary of the bucket of the working machine.
- Fig. 3: shows from behind an apparatus according to a first embodiment of the invention, with a working machine in a transfer condition.
- Fig. 4: shows from behind an apparatus according to a second embodiment of the invention, with a working machine in a transfer condition.
- Fig. 5: shows an apparatus of the invention in a side view and partially sectioned, the section along a line V-V in fig. 6.
- Fig. 6: shows a section along a line VI-VI in fig. 5.
- Fig. 7: shows an apparatus according to the first embodiment of the invention in a plan view.

The apparatus, designated generally in the drawings with reference numeral 1, is intended for transfer rides of a working machine 3, especially an excavating machine, movable on crawler tracks and provided with an excavating mechanism 2 or some other lifting means.

The apparatus 1 includes at least 2 spaced-apart wheels 4 mounted for a free rotation and a load platform 5 fitted therebetween.

The load platform 5 comprises a trough-like carrier, the floor of which is constituted by a number of spaced-apart beams 12 which are welded at the ends thereof securely to sheets that make up side walls 10 for the load platform 5, to which is in turn securely welded a plate-like rear wall and/or a beam 13 connecting the side walls 10 together at the upper portions thereof in the rear of the load platform 5.

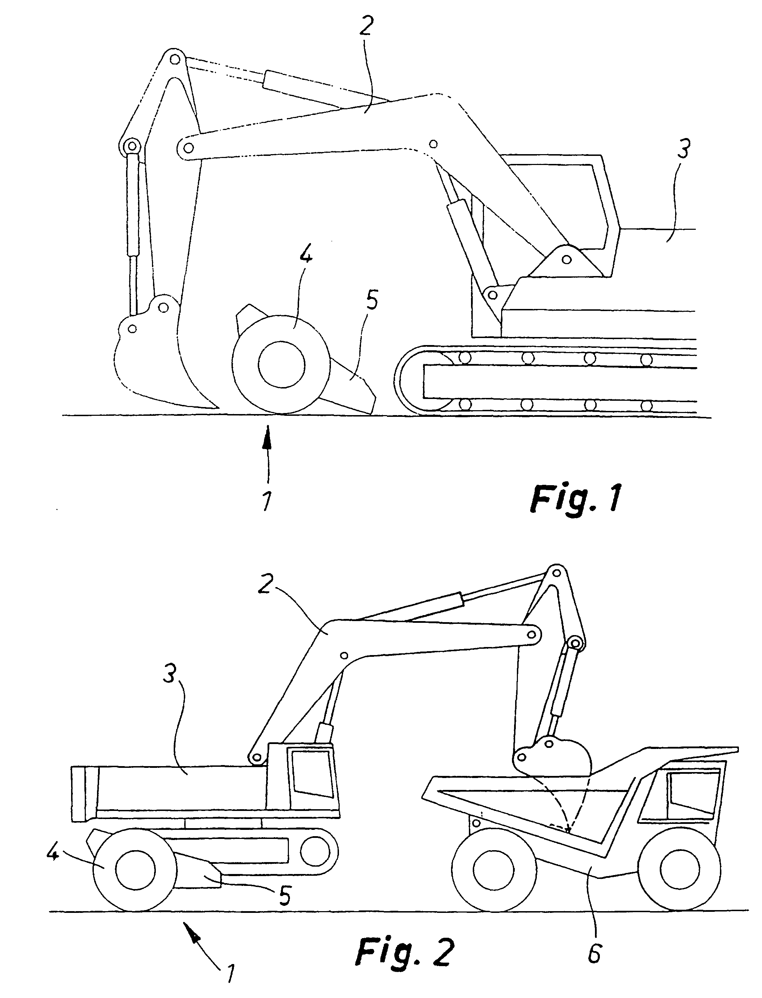

The wheels 4 are mounted in a per se known manner on the side walls 10 of the load platform 5. The point of attachment is selected such that, as a result of gravity, the load platform 5 has its leading edge always pressing against the ground or floor, whenever the apparatus 1 stands freely in an unloaded condition on the ground (fig. 1), the working machine 3 being derivable onto the load platform 5 in such a manner that one end of the working machine will rest on the load platform 5.

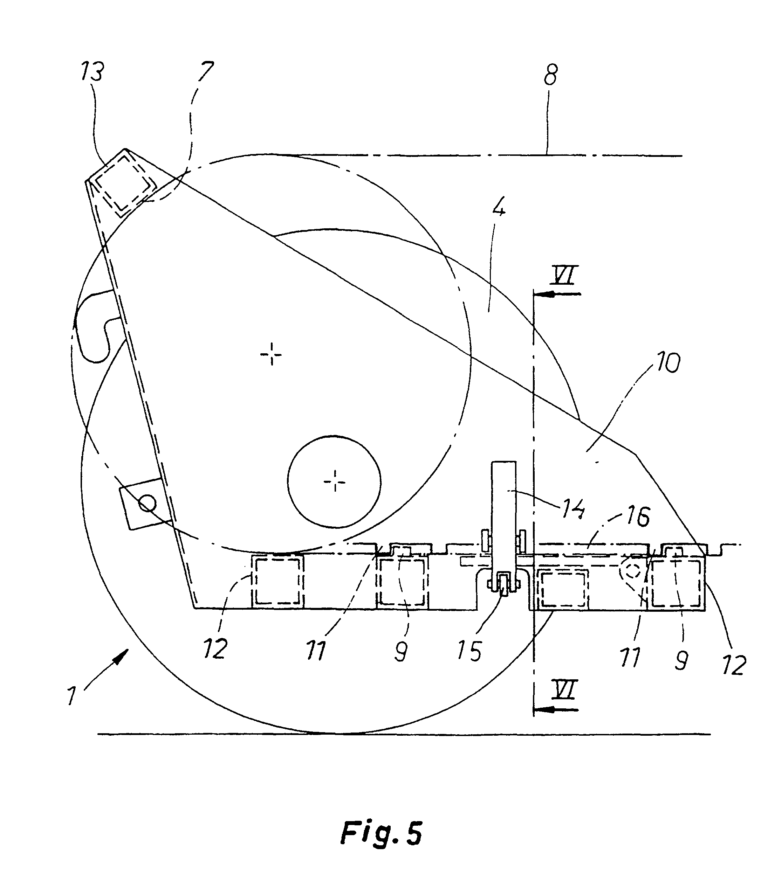

The load platform 5 is provided with a mechanical guard 7, which in the example of fig. 5 comprises a beam 13, for stopping the advancement of the working machine 3 at a desired spot on the load platform 5. The guard 7 is fitted in such a way that, when a working machine is in contact with the guard 7, the mass of the working machine 3 delivers to the load platform 5 a moment which forces the load platform 5 to pivot against the outer surface of a crawler track 8 of the working machine 3.

The load platform 5 has a bearing surface which is provided for each crawler track 8 with at least one gripping element 9 for eliminating a relative slippage between the crawler track 8 and the load platform 5 and for locking the working machine 3 against the guard 7. In the example of fig. 5, the gripping element 9 included in the load platform 5 is constituted by a protrusion, sticking out of the bearing surface of the load platform 5 and designed to match a respective gripping element 11 included in the crawler track 8. Naturally, the gripping element 9 may also be constituted by a recess, in which the respective gripping element of the crawler track takes hold of and prevents a relative slippage between the crawler track 8 and the load platform 5.

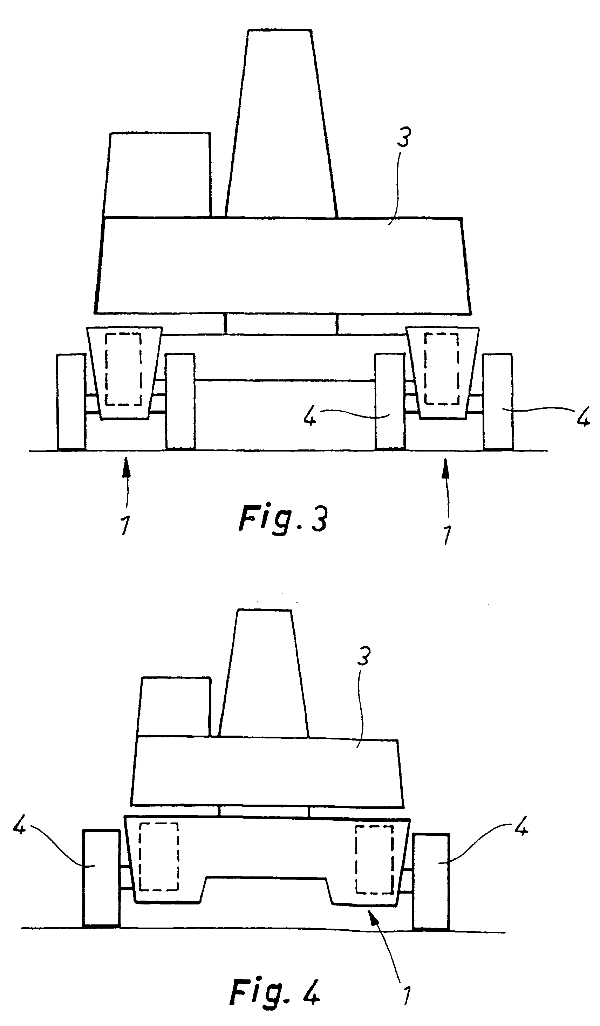

Depending on the weight and size of the transferable working machine 3, the apparatus 1 of the invention can be designed as depicted in fig. 4, with both crawler tracks 8 of the working machine 3 propped on the same apparatus 1. Especially when dealing with heavy-duty working machines 3, the exemplary embodiment shown in fig. 3 is more preferable, with each crawler track 8 provided with its own apparatus 1. In this case, both pieces of apparatus 1 are designed as independent units, separated from each other and only coupled together by the working machine 3 itself. In order to prevent a toe-out or toe-in from developing between the wheels 4 of the separate pieces of apparatus 1, the load platforms 5 have an internal width which is dimensioned to be just slightly more than the width of the crawler track 8, whereby the load platform 5 always sets itself substantially in alignment with the crawler track 8.

In the solution of fig. 3, which uses two pieces of apparatus 1, the side walls 10 of the load platform 5 are adapted to diverge from each other when progressing upwards from the bearing surface of the load platform 5. Thus, the apparatus 1 is freely inclinable when performing transfers on uneven terrains.

In one preferred embodiment of the invention, the apparatus 1 is fitted with wheels 4 which lock automatically upon the removal of a load off the load platform 5. Such a brake mechanism secures the immobilization of the apparatus 1 also on an inclined surface, thus facilitating the use of the apparatus 1.

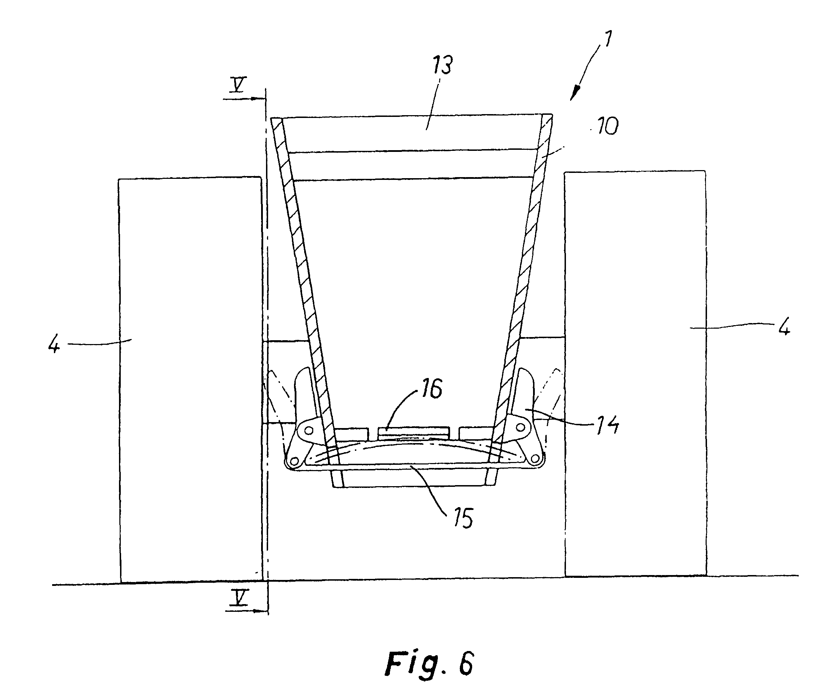

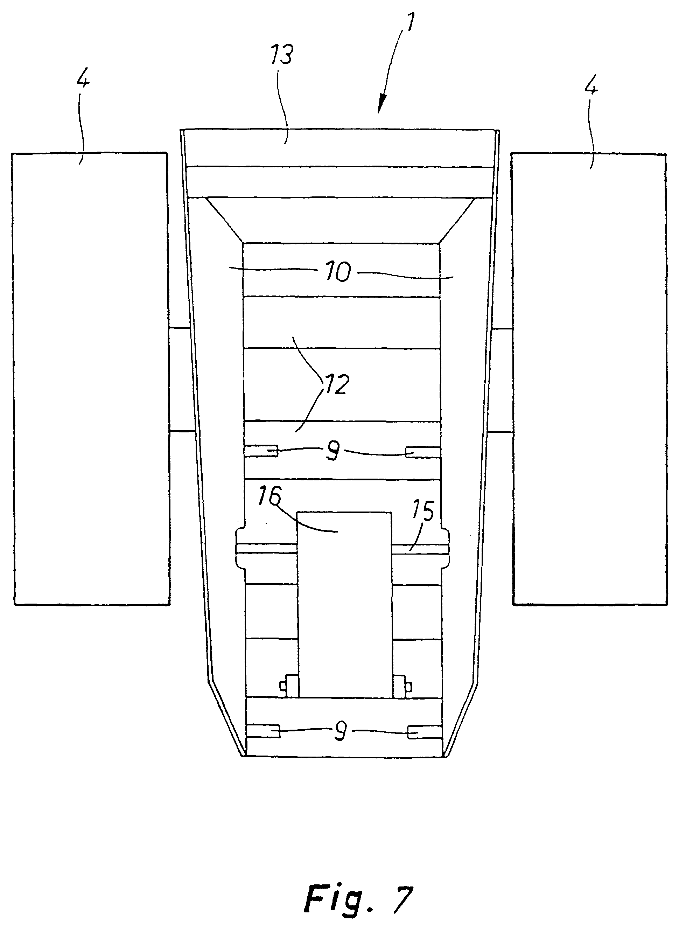

In the exemplary embodiment shown in figs. 5-7, the brake mechanism comprises a lever 14 articulated in the middle to the external surface of a side wall of the load platform 5. One of the legs, the bottom one, of the lever 14 is pivotably fitted with a plate spring 15 or the like. In an unloaded condition, the plate spring 15 is in the position depicted with dash-and-dot lines in fig. 6, the other, upper leg of the lever 14 leaning against the wheel 4 and blocking its rotation. In order to bend the spring 15, the load platform 5 is provided with a clack 16, pivotably journalled at its leading edge and pressed down by the crawler track 8 and, respectively, lifted up by the spring 15 whenever the clack 16 is not subjected to a laid.

The apparatus of the invention operates as follows.

In the first condition shown in fig. 1, the working machine 3 is driven up to rest on one or two pieces of apparatus 1 all the way until the crawler track 8 collides with the permanent guard 7 included in the apparatus 1. Thereafter, the track 8 may still slightly slip relative to the load platform 5 until said track grabs the gripping element 9. At this point, the apparatus 1 and the working machine 3 are completely locked to each other.

Following this, the excavating mechanism 2 of the working machine 3 is turned from the position of fig. 1 through 180° around the vertical axis, thus bringing the excavating mechanism 2 onto the load bed of the tractor vehicle 6 and lifting the crawler tracks 8 of the working machine 3 off the ground by means of the excavating mechanism 2, whereafter the working machine 3 is ready for a transfer.

If necessary, the working machine 3 can be used for braking action by adjusting the excavating mechanism 2 in such a way that the crawler tracks 8 touch the ground at the leading end of the working machine 3.

## Claims

1. An apparatus (1) for transfer rides of a working machine (3), especially an excavating machine, movable on crawler tracks and provided with an excavating mechanism (2) or some other lifting means, said apparatus (1) comprising at least two spaced-apart wheels (4) and a load platform (5) mounted there between, the working machine (3) being adapted to be hoisted at one end thereof to rest on the apparatus (1) and to be secured to the load platform (5) as well as at the other end to prop against a tractor vehicle (6) through the intermediary of the excavating mechanism (2) or other lifting means of the working machine, the working machine (3) is adapted to be driven onto the load platform (5), said load platform being provided with a guard (7) for stopping the advancement of the working machine (3) at a desired spot on the load platform (5) and said guard (7) being fitted in such a manner that, as the working machine (3) is in contact with the guard (7), the mass of said working machine (3) delivers to the load platform (5) a moment that forces the load platform (5) to pivot against the bottom surface of a crawler track (8) of the working machine (3), the load platform (5) being provided for each crawler track (8) with at least one gripping element (9) for eliminating a relative slippage between the crawler track (8) and the load platform (5) and for locking the working machine (3) against the guard (7), wherein for each crawler track (8) of the working machine (3) there is provided its own individual piece of apparatus (1) **characterized in that** the load platform (5) is provided with side walls (10) which are adapted to diverge from each other upwards from a bearing surface of the load platform (5).

2. An apparatus as set forth in claim 1, **characterized in that** the pieces of apparatus are designed as individual units, independent of each other.

3. An apparatus as set forth in claim 1 or 2,
**characterized in that** the apparatus (1) is provided with wheels (4) which lock automatically upon the removal of a load off the load platform (5).

4. An apparatus as set forth in claim 1 or 2,
**characterized in that** the gripping element (9) included in the load platform (5) comprises a protrusion sticking out of the bearing surface of the load platform (5) or, respectively, a recess extending below the bearing surface, designed to match a respective gripping element (11) included in the crawler track (8).

## Patentansprüche

1. Vorrichtung (1) für Transportfahrten einer Arbeitsmaschine (3), besonders eines Baggers, die auf Raupenketten beweglich und mit einem Aushubmechanismus (2) oder anderem Hebemittel versehen ist sowie mit mindestens zwei beabstandeten Rädern (4) und einer dazwischen montierten Ladeplattform (5), wobei die Arbeitsmaschine (3) an einem Ende davon hochgewunden werden kann, um auf der Vorrichtung (1) zu liegen und an der Ladeplattform (5) befestigt zu werden sowie sich an dem anderen Ende gegen ein Traktorfahrzeug (6) mittels des Aushubmechanismus (2) oder anderen Hebemittels der Arbeitsmaschine zu stützen, wobei die Arbeitsmaschine (3) auf der Ladeplattform (5) angetrieben werden kann und besagte Ladeplattform mit einem Schutz (7) versehen ist, um die vorrückende Arbeitsmaschine (3) an einem gewünschten Ort auf der Ladeplattform (5) anzuhalten und besagter Schutz (7) derart angebracht ist, dass, da die Arbeitsmaschine (3) in Kontakt mit dem Schutz (7) ist, die Masse der Arbeitsmaschine (3) auf die Ladeplattform (5) ein Moment ausübt, das die Ladeplattform (5), sich gegen die Bodenoberfläche einer Raupenkette (8) der Arbeitsmaschine (3) zu drehen zwingt, wobei die Ladeplattform (5) jeder Raupenkette (8) zwecks Beseitigung eines relativen Schlupfs zwischen der Raupenkette (8) und der Ladeplattform (5) und um die Arbeitsmaschine (3) gegen den Schutz (7) zu blockieren mit mindestens einem Greifelement (9) versehen ist, wobei für jede Raupenkette (8) der Arbeitsmaschine (3) ihr eigenes individuelles Stück Vorrichtung (1) vorgesehen ist, **dadurch gekennzeichnet, dass** die Ladeplattform (5) mit Seitenwänden (10) ausgestattet ist, die voneinander nach oben von einer Lagerfläche der Ladeplattform (5) divergieren.

2. Vorrichtung wie nach Anspruch 1, **dadurch gekennzeichnet, dass** die Vorrichtungsstücke als individuelle Einheiten entworfen sind, unabhängig voneinander.

3. Vorrichtung wie nach Anspruch 1 oder 2, **dadurch gekennzeichnet, dass** die Vorrichtung (1) mit Rädern (4) ausgestattet ist, die bei Entfernung einer Last von der Ladeplattform (5) automatisch blockieren.

4. Vorrichtung wie nach Anspruch 1 oder 2, **dadurch gekennzeichnet, dass** das Greifelement (9) in der Ladeplattform (5) einen Vorsprung umfasst, der aus der Lagerfläche der Ladeplattform (5) herausragt, oder jeweils eine Vertiefung unterhalb der Lagerfläche, die einem Greifelement (11) in der Raupenkette (8) entspricht.

## Revendications

1. Dispositif (1) pour le déplacement d'une machine de chantier (3), spécialement d'un excavateur, se déplaçant sur chenilles et pourvu d'un mécanisme d'excavation (2) ou de quelque autre moyen de soulèvement, ledit dispositif (1) comprenant au moins deux roues (4) écartées l'une de l'autre et une plate-forme de chargement (5) montée entre celles-ci, la machine de chantier (3) étant adaptée pour être soulevée à une extrémité de celle-ci pour rester sur le dispositif (1) et pour être fixée à la plate-forme de chargement (5) ainsi qu'à l'autre extrémité pour se caler contre un tracteur (6) par l'intermédiaire du mécanisme d'excavation (2) ou d'autres moyens de soulèvement de la machine de chantier, la machine de chantier (3) est adaptée pour être amenée sur la plate-forme de chargement (5), ladite plate-forme de chargement étant pourvue d'un dispositif de sûreté (7) pour arrêter l'avancement de la machine de chantier (3) à un point désiré sur la plate-forme de chargement (5) et ledit dispositif de sûreté (7) étant adapté de telle manière que, lorsque la machine de chantier (3) est en contact avec le dispositif de sûreté (7), la masse de ladite machine de chantier (3) livre à la plate-forme de chargement (5) un moment qui force la plate-forme de chargement (5) à pivoter contre la surface de base d'une chenille (8) de la machine de chantier (3), la plate-forme de chargement (5) est pourvue pour chaque chenille (8) d'au moins un élément d'adhésion (9) pour supprimer un glissement relatif entre la chenille (8) et la plate-forme de chargement (5) et pour bloquer la machine de chantier (3) contre le dispositif de sûreté (7), où pour chaque chenille (8) de la machine de chantier (3) est pourvue sa propre pièce individuelle du dispositif (1), **caractérisé en ce que** la plate-forme de chargement (5) est pourvue de parois latérales (10) qui sont adaptées pour s'écarter l'une de l'autre vers le haut à partir d'une surface de support de la plate-forme de chargement (5).

2. Dispositif selon la revendication 1, **caractérisé en ce que** les pièces du dispositif sont conçues en unités individuelles, indépendantes l'une de l'autre.

3. Dispositif selon la revendication 1 ou 2, **caractérisé en ce que** le dispositif (1) est pourvu de roues (4) qui se bloquent automatiquement lors de l'enlèvement d'un chargement de la plate-forme de chargement (5).

4. Dispositif selon la revendication 1 ou 2, **caractérisé en ce que** l'élément d'adhésion (9) inclus dans la plate-forme de chargement (5) comprend une saillie sortant de la surface de support de la plate-forme de chargement (5) ou, respectivement, un creux s'étendant en-dessous de la surface de support, conçu pour s'adapter à un élément d'adhésion (11) respectif inclus dans la chenille (8).
